# EUROPEAN PATENT APPLICATION

(11) **EP 4 797 604 A1**
(43) Date of publication of application: **26.08.2026**
(21) Application number: 24884836.8
(22) Date of filing: 30.10.2024
(51) Int. Cl.: H04L 5/00

(54) **COMMUNICATION METHOD AND APPARATUS**

(30) Priority: 31.10.2023 CN 202311439617
(71) Applicant: HUAWEI TECHNOLOGIES CO., LTD., Shenzhen 518129 (CN)
(72) Inventor: LU, Shaozhong, Shenzhen, Guangdong 518129 (CN); GUO, Zhiheng, Shenzhen, Guangdong 518129 (CN); SONG, Xinghua, Shenzhen, Guangdong 518129 (CN); HOU, Hailong, Shenzhen, Guangdong 518129 (CN)
(74) Representative: Isarpatent
(86) International application number: PCT/CN2024/128576
(87) International publication number: WO 2025/092836

(57) **Abstract**

Embodiments of this application provide a communication method and apparatus, and relate to the communication field, so that more users can be enabled to perform uplink communication. The communication method includes: generating a first signal, and sending the first signal. The first signal is determined based on a first base sequence. The first base sequence is a base sequence in a first base sequence group of N base sequence groups. The first base sequence group includes K base sequences. When N is an integer greater than 30, K is a positive integer; and when N is equal to 30, K is an integer greater than 2.

## Description

This application claims priority to Chinese Patent Application No. 202311439617.9, filed with the China National Intellectual Property Administration on October 31, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In a 5th generation (5th generation, 5G) communication system, a low-peak-to-average power ratio (peak-to-average power ratio, PAPR) sequence is a ZC (Zadoff-Chu) sequence, and is generated based on a cyclic shift value and a base sequence. Different uplink signals, such as a demodulation reference signal (demodulation reference signal, DMRS) and a sounding reference signal (sounding reference signal, SRS) may be generated by using the low-PAPR sequence. Currently, the base sequence forming the low-PAPR sequence is selected from one base sequence group selected from 30 base sequence groups, and a quantity of base sequences in the base sequence group is 1 or 2. Base sequences in different base sequence groups or different base sequences in a same base sequence group are selected, so that sequence group hopping (group hopping) and sequence hopping (sequence hopping) can be implemented, and uplink communication of different users can be supported, to reduce interference between the users.

However, for a future-oriented communication system, for example, a 6th generation (6th generation, 6G) communication system, a deployed frequency band is higher, network deployment is denser, and a network capacity is larger, so that a large quantity of users can be supported in accessing a network. However, an uplink signal formed by using the foregoing base sequence cannot support uplink communication in a scenario in which cells are denser and/or more users are served. As a result, interference between the users is increased. Therefore, to satisfy an application requirement, how to better implement uplink communication of more users becomes an urgent problem to be resolved.

### SUMMARY

Embodiments of this application provide a communication method and apparatus, to implement uplink communication of more users.

To achieve the foregoing objective, this application uses the following technical solutions.

According to a first aspect, a communication method is provided. The method may be performed by a terminal device, may be performed by a part of the terminal device, for example, a processor, a chip, or a chip system of the terminal device, or may be implemented by a logical module or software that can implement all or a part of the terminal device. The method includes: generating a first signal, and sending the first signal. The first signal is determined based on a first base sequence. The first base sequence is a base sequence in a first base sequence group of N base sequence groups. The first base sequence group includes K base sequences. When N is an integer greater than 30, K is a positive integer; and when N is equal to 30, K is an integer greater than 2.

According to a second aspect, a communication method is provided. The method may be performed by a network device, may be performed by a part of the network device, for example, a processor, a chip, or a chip system of the network device, or may be implemented by a logical module or software that can implement all or a part of the network device. The method includes: receiving a first signal, and parsing the first signal based on a first base sequence. The first base sequence is a base sequence in a first base sequence group of N base sequence groups. The first base sequence group includes K base sequences. When N is an integer greater than 30, K is a positive integer; and when N is equal to 30, K is an integer greater than 2.

According to the communication method in the first aspect or the second aspect, a quantity of base sequence groups and/or a quantity of base sequences in the base sequence group are/is expanded, so that more quantities of sequence group hopping and/or sequence hopping can be increased when cross-correlation of sequences is ensured Therefore, more users can be enabled to perform uplink communication in a scenario in which cells are denser and/or more users are served, and interference of sending uplink signals between different users can be reduced.

With reference to the first aspect or the second aspect, in a possible design solution, the first base sequence is determined based on a first ZC sequence; the first ZC sequence is determined based on a first root index and a length of the first ZC sequence; the first root index is determined based on a group number of the first base sequence group, a sequence number of the first base sequence in the first base sequence group, the length of the first ZC sequence, and a first parameter value; and the first parameter value is associated with N. Therefore, a quantity N of the base sequence groups is increased, so that selectivity of the first base sequence group is increased, the quantity of sequence group hopping is increased, and it is ensured that the selected first base sequence is still formed by the first ZC sequence in a preset quantity (for example, N_{ZC}-1) of ZC sequences, and N_{ZC} is a length of each ZC sequence, or it may be understood that the first base sequence is the first ZC sequence selected from the preset quantity of ZC sequences. In addition, when sequence group hopping is enabled, it can be ensured that the first base sequence selected from each base sequence group of the N base sequence groups is different, and the preset quantity of ZC sequences may be (approximately) evenly allocated to the N base sequence groups, to ensure the cross-correlation between the sequences.

With reference to the first aspect or the second aspect, in a possible design solution, N is an integer greater than 30, N=30 × a, and a is an integer greater than 1. Therefore, when the quantity of sequence group hopping is increased, a quantity of base sequence groups after increasing may be an integer multiple of 30. It should be understood that, when a=1, N=30, that is, capacity expansion is not performed on sequence group hopping.

With reference to the first aspect or the second aspect, in a possible design solution, the first parameter value may satisfy any one of the following: M=31 × b, M is greater than 31 and is a prime number, or M is a maximum prime number less than or equal to 31 × b, where M is the first parameter value, and b is an integer greater than 1. Therefore, when the quantity of sequence group hopping is increased, M satisfies the foregoing value. When sequence group hopping is performed, the first base sequence selected from each base sequence group is one of the preset quantity of ZC sequences, and the first base sequence in each base sequence group is not a same sequence, so that the cross-correlation between the sequences can be ensured.

With reference to the first aspect or the second aspect, in a possible design solution, the first parameter value may satisfy the following relationship: M≥N+1, and M is the first parameter value. Therefore, the cross-correlation between the sequences can be ensured. In a specific example, M=N+1.

With reference to the first aspect or the second aspect, in a possible design solution, that the first base sequence is determined based on the first ZC sequence specifically includes: When a first condition is satisfied, the first base sequence is determined based on the first ZC sequence. The first condition is one of the following: the length of the first ZC sequence is greater than or equal to a first threshold, a length of the first base sequence is greater than the first threshold, or the length of the first base sequence is greater than or equal to the first threshold. If the length of the first ZC sequence is greater than or equal to the first threshold, it can be ensured that a quantity of ZC sequences is sufficient to support capacity expansion of sequence group hopping.

With reference to the first aspect or the second aspect, in a possible design solution, the first threshold may satisfy any one of the following: G=K×M, G≥K×M and G is an integer multiple of ${N}_{sc}^{RB}$, G≥K×M and G is an integer multiple of ${N}_{sc}^{RB} / 2$, G≥K×M and G is an integer multiple of ${N}_{sc}^{RB} / {2}^{δ}$, G is an integer multiple of ${N}_{sc}^{RB}$ and G is a minimum value greater than or equal to K×M, G is an integer multiple of ${N}_{sc}^{RB} / 2$ and G is a minimum value greater than or equal to K×M, or G is an integer multiple of ${N}_{sc}^{RB} / {2}^{δ}$ and G is a minimum value greater than or equal to K×M. G is the first threshold. ${N}_{sc}^{RB}$ represents a quantity of subcarriers in a resource element. ${N}_{sc}^{RB}$ is used to determine the length of the first base sequence.

With reference to the first aspect or the second aspect, in a possible design solution, N=30, M=31, and M is the first parameter value. Therefore, when only the quantity of base sequences in the base sequence group is increased, the quantity N of base sequence groups and the first parameter value M still satisfy a relationship of M=N+1.

With reference to the first aspect or the second aspect, in a possible design solution, K=2ⁿ, and n is an integer greater than or equal to 0. Therefore, increasing a value of K may increase a quantity of sequence hopping.

With reference to the first aspect or the second aspect, in a possible design solution, the length of the first base sequence may satisfy the following conditions: N_{ZC} is a maximum prime number less than M_{ZC}, and N_{ZC} ≥ KM, where N_{ZC} represents the length of the first ZC sequence, and M_{ZC} represents the length of the first base sequence. Therefore, it can be ensured that the quantity of ZC sequences is sufficient to support capacity expansion of sequence hopping.

With reference to the first aspect or the second aspect, in a possible design solution, when K is an integer greater than 2, the sequence number of the first base sequence in the first base sequence group is determined based on one element in each of n pseudo-random sequences, and n=log₂ K. Therefore, when K is greater than 2, the sequence number of the first base sequence forming the first signal may be determined, so that the sequence number of the first base sequence may be one of 0, 1, 2, ..., and n-1. In addition, randomness of the sequence number is ensured, thereby ensuring cross-correlation between sequences that undergo sequence hopping.

With reference to the first aspect or the second aspect, in a possible design solution, the first signal may be a physical uplink control channel PUCCH. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = {c}_{i} \left(2{n}_{s , f}^{μ}+{n}_{hop}\right)$. cᵢ represents an element whose element number is $2 {n}_{s , f}^{μ} + {n}_{hop}$ in an i^{th} pseudo-random sequence of the n pseudo-random sequences. cᵢ(·) represents the i^{th} pseudo-random sequence. 0 ≤ i ≤ n-1. i is an integer. ${c}_{init , i} = {2}^{5} \left⌊\left({n}_{ID}+i\right)/N\right⌋ + \left(\left({n}_{ID}+i\right)mod N\right)$. c_{init,i} represents an initial phase of cᵢ(·). ${n}_{s , f}^{μ}$ represents a slot number in one system frame when a subcarrier spacing is configured as µ. nₕₒₚ represents a frequency hopping index. n_{ID} represents an identifier of a cell in which a terminal device is located.

With reference to the first aspect or the second aspect, in a possible design solution, the first signal may be a demodulation reference signal DMRS. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = {c}_{i} \left({N}_{symb}^{slot}{n}_{s , f}^{μ}+1\right)$. cᵢ represents an element whose element number is ${N}_{symb}^{slot} {n}_{s , f}^{μ} + l$ in an i^{th} pseudo-random sequence of the n pseudo-random sequences. cᵢ(·) represents the i^{th} pseudo-random sequence. 0 ≤ i ≤ n- 1. i is an integer. ${c}_{init , i} = {n}_{ID}^{RS} + i$. c_{init,i} represents an initial phase of cᵢ(·). ${n}_{ID}^{RS}$ represents an identifier of a DMRS sequence. ${n}_{s , f}^{μ}$ represents a slot number in one system frame when a subcarrier spacing is configured as µ. ${N}_{symb}^{slot}$ represents a quantity of symbols included in one slot. 1 represents a symbol index of a DMRS symbol in a slot.

With reference to the first aspect or the second aspect, in a possible design solution, the first signal may be a sounding reference signal SRS. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = {c}_{i} \left({N}_{symb}^{slot}{n}_{s , f}^{μ}+{l}_{0}+l′\right)$. cᵢ represents an element whose element number is ${N}_{symb}^{slot} {n}_{s , f}^{μ} + {l}_{0} + l ′$ in an i^{th} pseudo-random sequence of the n pseudo-random sequences. cᵢ(·) represents the i^{th} pseudo-random sequence. 0 ≤ i ≤ n-1. i is an integer. ${c}_{init , i} = {n}_{ID}^{SRS} + i$. c_{init,i} represents an initial phase of cᵢ(·). ${n}_{ID}^{SRS}$ represents an identifier of an SRS sequence. ${n}_{s , f}^{μ}$ represents a slot number in one system frame when a subcarrier spacing is configured as µ. ${N}_{symb}^{slot}$ represents a quantity of symbols included in one slot. l₀ represents a start symbol index of the SRS in a slot. $l ′ ∈ \left\{0,1,…,{N}_{symb}^{SRS}-1\right\}$. ${N}_{symb}^{SRS}$ represents a quantity of symbols of the SRS.

With reference to the first aspect or the second aspect, in a possible design solution, when K is an integer greater than 2, the sequence number of the first base sequence in the first base sequence group is determined based on n elements in one pseudo-random sequence, and n=log₂ K. Therefore, when K is greater than 2, the sequence number of the first base sequence forming the first signal may also be determined, so that the sequence number of the first base sequence may be one of 0, 1, 2, ..., and n-1. In addition, randomness of the sequence number is ensured, thereby ensuring cross-correlation between sequences that undergo sequence hopping.

With reference to the first aspect or the second aspect, in a possible design solution, numbers of the n elements are consecutively arranged in the pseudo-random sequence, or numbers of the n elements are arranged at equal intervals in the pseudo-random sequence.

With reference to the first aspect or the second aspect, in a possible design solution, the first signal may be a physical uplink control channel PUCCH. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = c \left(2\left(n\times {n}_{s , f}^{μ}+i\right)+{n}_{hop}\right)$. 0 ≤ i ≤ n-1. i is an integer. c(·) represents one pseudo-random sequence. cᵢ represents one element in one pseudo-random sequence. ${n}_{s , f}^{μ}$ represents a slot number in one frame when a subcarrier spacing is configured as µ. nₕₒₚ represents a frequency hopping index.

With reference to the first aspect or the second aspect, in a possible design solution, the first signal may be a physical uplink control channel PUCCH. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = c \left(n\left(2\times {n}_{s , f}^{μ}+{n}_{hop}\right)+i\right)$. 0 ≤ i ≤ n-1. i is an integer. c(·) represents one pseudo-random sequence. cᵢ represents one element in one pseudo-random sequence. ${n}_{s , f}^{μ}$ represents a slot number in one frame when a subcarrier spacing is configured as µ. nₕₒₚ represents a frequency hopping index.

With reference to the first aspect or the second aspect, in a possible design solution, the first signal may be a demodulation reference signal DMRS. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = c \left({N}_{symb}^{slot}\left(n\times {n}_{s , f}^{μ}+i\right)+l\right)$. 0 ≤ i ≤ n- 1. i is an integer. c(·) represents one pseudo-random sequence. cᵢ represents one element in one pseudo-random sequence. ${n}_{s , f}^{μ}$ represents a slot number in one frame when a subcarrier spacing is configured as µ. ${N}_{symb}^{slot}$ represents a quantity of symbols included in one slot. 1 represents a symbol index of a DMRS symbol in a slot.

With reference to the first aspect or the second aspect, in a possible design solution, the first signal may be a demodulation reference signal DMRS. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = c \left(n\left({N}_{symb}^{slot}\times {n}_{s , f}^{μ}+l\right)+i\right)$. 0 ≤ i ≤ n-1. i is an integer. c(·) represents one pseudo-random sequence. cᵢ represents one element in one pseudo-random sequence. ${n}_{s , f}^{μ}$ represents a slot number in one frame when a subcarrier spacing is configured as µ. ${N}_{symb}^{slot}$ represents a quantity of symbols included in one slot. 1 represents a symbol index of a DMRS symbol in a slot.

With reference to the first aspect or the second aspect, in a possible design solution, the first signal may be a sounding reference signal SRS. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = c \left({N}_{symb}^{slot}\left(n\times {n}_{s , f}^{μ}+i\right)+{l}_{0}+l′\right)$. 0 ≤ i ≤ n-1. i is an integer. c(·) represents one pseudo-random sequence. cᵢ represents one element in one pseudo-random sequence. ${n}_{s , f}^{μ}$ represents a slot number in one frame when a subcarrier spacing is configured as µ. ${N}_{symb}^{slot}$ represents a quantity of symbols included in one slot. l₀ represents a start symbol index of the SRS in a slot. $l ′ ∈ \left\{0,1,…,{N}_{symb}^{SRS}-1\right\}$. ${N}_{symb}^{SRS}$ represents a quantity of symbols of the SRS.

With reference to the first aspect or the second aspect, in a possible design solution, the first signal may be a sounding reference signal SRS. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = c \left(n\left({N}_{symb}^{slot}\times {n}_{s , f}^{μ}+{l}_{0}+l′\right)+i\right)$. 0 ≤ i ≤ n-1. i is an integer. c(·) represents one pseudo-random sequence. cᵢ represents one element in one pseudo-random sequence. ${n}_{s , f}^{μ}$ represents a slot number in one frame when a subcarrier spacing is configured as µ. ${N}_{symb}^{slot}$ represents a quantity of symbols included in one slot. l₀ represents a start symbol index of the SRS in a slot. $l ′ ∈ \left\{0,1,…,{N}_{symb}^{SRS}-1\right\}$. ${N}_{symb}^{SRS}$ represents a quantity of symbols of the SRS.

According to a third aspect, a communication apparatus is provided, to implement the foregoing methods. The communication apparatus may be the terminal device in the first aspect, an apparatus including the terminal device, or an apparatus included in the terminal device, for example, a chip. The communication apparatus includes a corresponding module, unit, or means (means) for implementing the method according to the first aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to generate a first signal. The first signal is determined based on a first base sequence. The first base sequence is a base sequence in a first base sequence group of N base sequence groups. The first base sequence group includes K base sequences. When N is an integer greater than 30, K is a positive integer; and when N is equal to 30, K is an integer greater than 2. The transceiver module is configured to send the first signal.

According to a fourth aspect, a communication apparatus is provided, to implement the foregoing methods. The communication apparatus may be the network device in the second aspect, an apparatus including the network device, or an apparatus included in the network device, for example, a chip. The communication apparatus includes a corresponding module, unit, or means (means) for implementing the method according to the second aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The transceiver module is configured to receive a first signal. The processing module is configured to parse the first signal based on a first base sequence. The first base sequence is a base sequence in a first base sequence group of N base sequence groups. The first base sequence group includes K base sequences. When N is an integer greater than 30, K is a positive integer; and when N is equal to 30, K is an integer greater than 2.

With reference to the third aspect or the fourth aspect, in a possible design solution, the first base sequence is determined based on a first ZC sequence; the first ZC sequence is determined based on a first root index and a length of the first ZC sequence; the first root index is determined based on a group number of the first base sequence group, a sequence number of the first base sequence in the first base sequence group, the length of the first ZC sequence, and a first parameter value; and the first parameter value is associated with N.

With reference to the third aspect or the fourth aspect, in a possible design solution, N is an integer greater than 30, N=30 × a, and a is an integer greater than 1.

With reference to the third aspect or the fourth aspect, in a possible design solution, the first parameter value may satisfy any one of the following: M=31 × b, M is greater than 31 and is a prime number, or M is a maximum prime number less than or equal to 31 × b, where M is the first parameter value, and b is an integer greater than 1.

With reference to the third aspect or the fourth aspect, in a possible design solution, the first parameter value may satisfy the following relationship: M≥N+1, and M is the first parameter value.

With reference to the third aspect or the fourth aspect, in a possible design solution, that the first base sequence is determined based on the first ZC sequence specifically includes: When a first condition is satisfied, the first base sequence is determined based on the first ZC sequence. The first condition is one of the following: the length of the first ZC sequence is greater than or equal to a first threshold, a length of the first base sequence is greater than the first threshold, or the length of the first base sequence is greater than or equal to the first threshold.

With reference to the third aspect or the fourth aspect, in a possible design solution, the first threshold may satisfy any one of the following: G=K×M, G≥K×M and G is an integer multiple of ${N}_{sc}^{RB}$, G≥K×M and G is an integer multiple of ${N}_{sc}^{RB} / 2$, G≥K×M and G is an integer multiple of ${N}_{sc}^{RB} / {2}^{δ}$, G is an integer multiple of ${N}_{sc}^{RB}$ and G is a minimum value greater than or equal to K×M, G is an integer multiple of ${N}_{sc}^{RB} / 2$ and G is a minimum value greater than or equal to K×M, or G is an integer multiple of ${N}_{sc}^{RB} / {2}^{δ}$ and G is a minimum value greater than or equal to K×M. G is the first threshold. ${N}_{sc}^{RB}$ represents a quantity of subcarriers in a resource element. ${N}_{sc}^{RB}$ is used to determine the length of the first base sequence.

With reference to the third aspect or the fourth aspect, in a possible design solution, N=30, M=31, and M is the first parameter value.

With reference to the third aspect or the fourth aspect, in a possible design solution, K=2ⁿ, and n is an integer greater than or equal to 0.

With reference to the third aspect or the fourth aspect, in a possible design solution, the length of the first base sequence may satisfy the following conditions: N_{ZC} is a maximum prime number less than M_{ZC}, and N_{ZC} ≥ KM, where N_{ZC} represents the length of the first ZC sequence, and M_{ZC} represents the length of the first base sequence.

With reference to the third aspect or the fourth aspect, in a possible design solution, when K is an integer greater than 2, the sequence number of the first base sequence in the first base sequence group is determined based on one element in each of n pseudo-random sequences, and n=log₂ K.

With reference to the third aspect or the fourth aspect, in a possible design solution, the first signal may be a physical uplink control channel PUCCH. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = {c}_{i} \left(2{n}_{s , f}^{μ}+{n}_{hop}\right)$. cᵢ represents an element whose element number is $2 {n}_{s , f}^{μ} + {n}_{hop}$nₕₒₚ in an i^{th} pseudo-random sequence of the n pseudo-random sequences. cᵢ(·) represents the i^{th} pseudo-random sequence. 0 ≤ i ≤ n-1. i is an integer. ${c}_{init , i} = {2}^{5} \left⌊\left({n}_{ID}+i\right)/N\right⌋ + \left(\left({n}_{ID}+i\right) mod N\right)$. c_{init,i} represents an initial phase of cᵢ(·). ${n}_{s , f}^{μ}$ represents a slot number in one system frame when a subcarrier spacing is configured as µ. nₕₒₚ represents a frequency hopping index. n_{ID} represents an identifier of a cell in which a terminal device is located.

With reference to the third aspect or the fourth aspect, in a possible design solution, the first signal may be a demodulation reference signal DMRS. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = {c}_{i} \left({N}_{symb}^{slot}{n}_{s , f}^{μ}+l\right)$. cᵢ represents an element whose element number is ${N}_{symb}^{slot} {n}_{s , f}^{μ} + l$ in an i^{th} pseudo-random sequence of the n pseudo-random sequences. cᵢ(·) represents the i^{th} pseudo-random sequence. 0 ≤ i ≤ n- 1. i is an integer. ${c}_{init , i} = {n}_{ID}^{RS} + i$. c_{init,i} represents an initial phase of cᵢ(·). ${n}_{ID}^{RS}$ represents an identifier of a DMRS sequence. ${n}_{s , f}^{μ}$ represents a slot number in one system frame when a subcarrier spacing is configured as µ. ${N}_{symb}^{slot}$ represents a quantity of symbols included in one slot. 1 represents a symbol index of a DMRS symbol in a slot.

With reference to the third aspect or the fourth aspect, in a possible design solution, the first signal may be a sounding reference signal SRS. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = {c}_{i} \left({N}_{symb}^{slot}{n}_{s , f}^{μ}+{l}_{0}+l′\right)$. cᵢ represents an element whose element number is ${N}_{symb}^{slot} {n}_{s , f}^{μ} + {l}_{0} + l ′$ in an i^{th} pseudo-random sequence of the n pseudo-random sequences. cᵢ(·) represents the i^{th} pseudo-random sequence. 0 ≤ i ≤ n-1. i is an integer. ${c}_{init , i} = {n}_{ID}^{SRS} + i$. c_{init,i} represents an initial phase of cᵢ(·). ${n}_{ID}^{SRS}$ represents an identifier of an SRS sequence. ${n}_{s , f}^{μ}$ represents a slot number in one system frame when a subcarrier spacing is configured as µ. ${N}_{symb}^{slot}$ represents a quantity of symbols included in one slot. l₀ represents a start symbol index of the SRS in a slot. $l ′ ∈ \left\{0,1,…,{N}_{symb}^{SRS}-1\right\}$. ${N}_{symb}^{SRS}$ represents a quantity of symbols of the SRS.

With reference to the third aspect or the fourth aspect, in a possible design solution, when K is an integer greater than 2, the sequence number of the first base sequence in the first base sequence group is determined based on n elements in one pseudo-random sequence, and n=log₂ K.

With reference to the third aspect or the fourth aspect, in a possible design solution, numbers of the n elements are consecutively arranged in the pseudo-random sequence, or numbers of the n elements are arranged at equal intervals in the pseudo-random sequence.

With reference to the third aspect or the fourth aspect, in a possible design solution, the first signal may be a physical uplink control channel PUCCH. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = c \left(2\left(n\times {n}_{s , f}^{μ}+i\right)+{n}_{hop}\right)$. 0 ≤ i ≤ n-1. i is an integer. c(·) represents one pseudo-random sequence. cᵢ represents one element in one pseudo-random sequence. ${n}_{s , f}^{μ}$ represents a slot number in one frame when a subcarrier spacing is configured as µ. nₕₒₚ represents a frequency hopping index.

With reference to the third aspect or the fourth aspect, in a possible design solution, the first signal may be a physical uplink control channel PUCCH. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = c \left(n\left(2\times {n}_{s , f}^{μ}+{n}_{hop}\right)+i\right)$. 0 ≤ i ≤ n-1. i is an integer. c(·) represents one pseudo-random sequence. cᵢ represents one element in one pseudo-random sequence. ${n}_{s , f}^{μ}$ represents a slot number in one frame when a subcarrier spacing is configured as µ. nₕₒₚ represents a frequency hopping index.

With reference to the third aspect or the fourth aspect, in a possible design solution, the first signal may be a demodulation reference signal DMRS. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = c \left({N}_{symb}^{slot}\left(n\times {n}_{s , f}^{μ}+i\right)+l\right)$. 0 ≤ i ≤ n- 1 . i is an integer. c(·) represents one pseudo-random sequence. cᵢ represents one element in one pseudo-random sequence. ${n}_{s , f}^{μ}$ represents a slot number in one frame when a subcarrier spacing is configured as µ. ${N}_{symb}^{slot}$ represents a quantity of symbols included in one slot. 1 represents a symbol index of a DMRS symbol in a slot.

With reference to the third aspect or the fourth aspect, in a possible design solution, the first signal may be a demodulation reference signal DMRS. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = c \left(n\left({N}_{symb}^{slot}\times {n}_{s , f}^{μ}+l\right)+i\right)$. 0 ≤ i ≤ n-1. i is an integer. c(·) represents one pseudo-random sequence. cᵢ represents one element in one pseudo-random sequence. ${n}_{s , f}^{μ}$ represents a slot number in one frame when a subcarrier spacing is configured as µ. ${N}_{symb}^{slot}$ represents a quantity of symbols included in one slot. 1 represents a symbol index of a DMRS symbol in a slot.

With reference to the third aspect or the fourth aspect, in a possible design solution, the first signal may be a sounding reference signal SRS. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = c \left({N}_{symb}^{slot}\left(n\times {n}_{s , f}^{μ}+i\right)+{l}_{0}+l′\right)$. 0 ≤ i ≤ n-1. i is an integer. c(·) represents one pseudo-random sequence. cᵢ represents one element in one pseudo-random sequence. ${n}_{s , f}^{μ}$ represents a slot number in one frame when a subcarrier spacing is configured as µ. ${N}_{symb}^{slot}$ represents a quantity of symbols included in one slot. l₀ represents a start symbol index of the SRS in a slot. $l ′ ∈ \left\{0,1,…,{N}_{symb}^{SRS}-1\right\}$. ${N}_{symb}^{SRS}$ represents a quantity of symbols of the SRS.

With reference to the third aspect or the fourth aspect, in a possible design solution, the first signal may be a sounding reference signal SRS. The sequence number of the first base sequence in the first base sequence group satisfies the following relationship: v = 2ⁿ⁻¹ × cₙ₋₁ + 2ⁿ⁻² × cₙ₋₂+...+2⁰ × c₀. v represents the sequence number of the first base sequence in the first base sequence group. ${c}_{i} = c \left(n\left({N}_{symb}^{slot}\times {n}_{s , f}^{μ}+{l}_{0}+l′\right)+i\right)$. 0 ≤ i ≤ n-1. i is an integer. c(·) represents one pseudo-random sequence. cᵢ represents one element in one pseudo-random sequence. ${n}_{s , f}^{μ}$ represents a slot number in one frame when a subcarrier spacing is configured as µ. ${N}_{symb}^{slot}$ represents a quantity of symbols included in one slot. l₀ represents a start symbol index of the SRS in a slot. $l ′ ∈ \left\{0,1,…,{N}_{symb}^{SRS}-1\right\}$. ${N}_{symb}^{SRS}$ represents a quantity of symbols of the SRS.

With reference to the third aspect or the fourth aspect, in a possible design solution, the transceiver module may include a receiving module and a sending module. The sending module is configured to implement a sending function of the communication apparatus according to the third aspect or the fourth aspect, and the receiving module is configured to implement a receiving function of the communication apparatus according to the third aspect or the fourth aspect.

With reference to the third aspect or the fourth aspect, in a possible design solution, the communication apparatus according to the third aspect or the fourth aspect may further include a storage module, and the storage module stores a program or instructions. When the processing module executes the program or the instructions, the communication apparatus in the fourth aspect may be caused to perform the method in the first aspect or the second aspect.

According to a fifth aspect, a communication apparatus (for example, the communication apparatus may be a chip or a chip system) is provided. The communication apparatus includes a processor, configured to implement the functions in the first aspect or the second aspect.

In a possible design solution, the communication apparatus may further include a memory, and the memory is configured to store necessary program instructions and data. The processor is coupled to the memory, and the processor is configured to execute the computer program or the instructions stored in the memory, to cause the communication apparatus to perform the method according to the first aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In a possible design solution, the processor may be integrated with the memory.

In some possible designs, when the apparatus is the chip system, the apparatus may include a chip, or may include a chip and another discrete component.

According to a sixth aspect, a communication apparatus is provided. The communication apparatus includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method according to the first aspect or the second aspect by using a logic circuit or by executing code instructions.

According to a seventh aspect, a communication apparatus is provided. The communication apparatus may be a terminal device, or may be a module or unit (for example, a chip, a chip system, or a circuit) that is in the terminal device and that is in one-to-one correspondence with the method/operation/step/action that is performed and described in the first aspect, or may be used in a matching manner with the terminal device. Alternatively, the communication apparatus may be a network device, or may be a module or unit (for example, a chip, a chip system, or a circuit) that is in the network device and that is in one-to-one correspondence with the method/operation/step/action that is performed and described in the second aspect, or may be used in a matching manner with the network device.

It may be understood that when the communication apparatus provided in either of the fifth aspect or the seventh aspect is a chip, the foregoing sending action/function may be understood as an output, and the foregoing receiving action/function may be understood as an input.

According to an eighth aspect, a computer-readable storage medium is provided. The computer-readable storage medium stores a computer program or instructions. When the computer program or the instructions are run on a communication apparatus, the communication apparatus is caused to perform the method according to the first aspect or the second aspect.

According to a ninth aspect, a computer program product including instructions is provided. The computer program product includes computer program code. When the computer program code is run on a communication apparatus, the communication apparatus is caused to perform the method according to the first aspect or the second aspect.

According to a tenth aspect, a communication system is provided, including a terminal device configured to implement the method according to the first aspect and a network device configured to implement the method according to the second aspect.

### BRIEF DESCRIPTION OF DRAWINGS

FIG. 1 is a diagram of an architecture of a communication system according to an embodiment of this application;
FIG. 2 is a schematic flowchart of a communication method according to an embodiment of this application;
FIG. 3 is a diagram of a structure of a communication apparatus according to an embodiment of this application; and
FIG. 4 is a diagram of a structure of another communication apparatus according to an embodiment of this application.

### DESCRIPTION OF EMBODIMENTS

For ease of understanding of embodiments of this application, the following descriptions are provided before embodiments of this application are described.

First, numerical references such as first and second in embodiments of this application are merely for differentiation for ease of description, and are not intended to limit the scope of embodiments of this application, for example, for distinguishing between different indication information. For another example, a first network area and a second network area are merely intended to distinguish between different areas, and are not intended to limit a sequence thereof. A person skilled in the art may understand that the terms such as "first" and "second" do not limit a quantity or an execution sequence, and the terms such as "first" and "second" do not indicate a definite difference.

Second, in embodiments of this application, descriptions such as "when", "in a case", and "if" mean that a device (for example, a terminal device or a network device) performs corresponding processing in an objective situation, and are not intended to limit time, and the device (for example, the terminal device or the network device) is not required to perform a determining action during implementation; and do not mean any other limitation.

Third, in embodiments of this application, terms such as "example" or "for example" are used to give an example, an illustration, or a description. Any embodiment or design solution described as an "example" or "for example" in embodiments of this application should not be explained as being more preferred or having more advantages than another embodiment or design solution. Exactly, use of the term such as "example" or "for example" is intended to present a related concept in a specific manner for ease of understanding.

Fourth, in embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of a plurality of items, including any combination of singular items (pieces) or plural items (pieces). For example, at least one item (piece) of a, b, or c may represent a, b, c, a and b, a and c, b and c, or a, b, and c, where a, b, and c may be singular or plural.

The following describes a communication system, an applicable network element, and related terms in embodiments of this application.

All aspects, embodiments, or features are presented in embodiments of this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system, for example, a long term evolution (long term evolution, LTE) system or a worldwide interoperability for microwave access (worldwide interoperability for microwave access, WiMAX) communication system, a 5G mobile communication system, for example, a new radio (new radio, NR) system, and a future communication system, for example, a 6G mobile communication system.

### 1. Uplink reference signal

The uplink reference signal is a reference signal sent by a terminal device, for example, an SRS, a DMRS of an uplink control channel, or a DMRS of a physical uplink shared channel (physical uplink shared channel, PUSCH) in a discrete Fourier transform-spread orthogonal frequency division multiplexing (discrete Fourier transform-spread orthogonal frequency division multiplexing, DFT-s-OFDM) waveform. The uplink reference signal may be used for obtaining uplink channel state information, and the channel state information may be used for uplink data demodulation and detection. In a time division duplex (time division duplex, TDD) system, the uplink reference signal may be further used for obtaining downlink channel state information by using channel reciprocity. The SRS is used as an example. A network device obtains downlink channel state information by measuring an SRS sequence sent by the terminal device. The channel state information is used for precoding, modulation and coding scheme determining, and the like during downlink data transmission. Therefore, obtaining accurate channel state information based on the uplink reference signal is important for efficiency of uplink data transmission or downlink data transmission.

### 2. Low-PAPR sequence

The low-PAPR sequence in NR is a ZC sequence, the low-PAPR sequence is generated based on a cyclic shift value and a base sequence, and the low-PAPR sequence may be used to generate different uplink signal sequences. Specifically, the low-PAPR sequence is shown in the following formula: ${r}_{u , v}^{\left(α, δ\right)} \left(s\right) = {e}^{jαn} {\overline{r}}_{u , v} \left(s\right) , and 0 \leq s < {M}_{ZC} ,$ where s is an integer greater than or equal to 0.${r}_{u , v}^{\left(α, δ\right)} \left(s\right)$ is an s^{th} element in the low-PAPR sequence. α is the cyclic shift value. A value of δ is related to a type of the uplink signal sequence. r̅_{u,v}(s) is an s^{th} element in a base sequence ${r}_{u , v}^{\left(α, δ\right)} \left(⋅\right)$. u is a group number (group number) of a base sequence group where the base sequence ${r}_{u , v}^{\left(α, δ\right)} \left(⋅\right)$is located. v is a base sequence number (base sequence number) of the base sequence ${r}_{u , v}^{\left(α, δ\right)} \left(⋅\right)$ in the base sequence group. ${M}_{ZC} = {mN}_{sc}^{RB} / {2}^{δ}$. M_{ZC} is a length of the low-PAPR sequence (also a length of the base sequence). m is used to determine M_{ZC}, is a positive integer, and may be understood as an integer multiple of ${N}_{sc}^{RB} / {2}^{δ}$. ${N}_{sc}^{RB}$ is a quantity of subcarriers included in one resource block (resource block, RB). Generally, ${N}_{sc}^{RB} = 12$. According to different values of α and δ, a plurality of low-PAPR sequences may be obtained based on one base sequence.

Currently, there are 30 base sequence groups in total, that is, u ∈ {0,1,...,29}. If ${M}_{ZC} = {mN}_{sc}^{RB} / {2}^{δ}$, and 1/2 ≤ m/2^{δ} ≤ 5, each base sequence group includes one base sequence, that is, v = 0. If ${M}_{ZC} = {mN}_{sc}^{RB} / {2}^{δ}$, and 6 ≤ m/2^{δ}, each base sequence group includes two base sequences, that is, v = 0,1.

In addition, when ${M}_{ZC} \geq 3 {N}_{sc}^{RB}$, a base sequence [r̅_{u,v}(0),...,r̅_{u,v}(M_{ZC}- 1)] whose length is M_{ZC} is implemented in the following manner: ${\overline{r}}_{u , v} \left(s\right) = {x}_{q} \left(s mod {N}_{ZC}\right) ,$ and ${x}_{q} \left(j\right) = {e}^{- j \frac{πqj \left(j+1\right)}{{N}_{ZC}}} ,$ where x_{q}(j) is a j^{th} element in a ZC sequence whose root number is q, 0 ≤ j < N_{ZC}, j is an integer, N_{ZC} is a length of the ZC sequence, lengths of ZC sequences with different q values are all N_{ZC}, and N_{ZC} is a maximum prime number less than M_{ZC}.

In addition, the root number is determined according to the following formula: q = $\left⌊\overline{q}+1/2\right⌋ + v ⋅ {\left(-1\right)}^{\left⌊2\overline{q}\right⌋}$ and q̅ = N_{ZC} · (u + 1)/31. In other words, the root number q of the ZC sequence is related to a group number u of a base sequence, a base sequence number v of the base sequence, and the length N_{ZC} of the ZC sequence.

In this embodiment of this application, the root number q of the ZC sequence may also be referred to as a root index, a root indicator, a root, or the like. This is not limited herein.

It can be learned from the foregoing description that the base sequence may be a sequence generated based on the ZC sequence. For example, the base sequence may be the ZC sequence itself, or the base sequence may be a sequence generated by extending or intercepting the ZC sequence through a cyclic shift.

The ZC sequence has a constant modulus characteristic and a zero cyclic auto-correlation characteristic of a constant amplitude zero auto-correlation (constant amplitude zero auto-correlation, CAZAC) sequence. For a same ZC sequence, different uplink reference signal sequences may be obtained by using different cyclic shift values α, and the uplink reference signal sequences obtained by using different cyclic shift values are mutually orthogonal (which is also referred to as code division orthogonality). Therefore, for a same ZC sequence, different cyclic shift values α₁≠α₂ (mod N_{ZC}) may be allocated to different users, and these users may transmit ZC sequences with different cyclic shifts on a same time-frequency resource. When a channel of a user is flat within the length of the ZC sequence, no interference exists between the users.

The ZC sequence also has a uniform cross-correlation characteristic. A cross-correlation coefficient of two ZC sequences that have a same length N_{ZC} and different root indicators is used as an example. For example, the root indicators of the two ZC sequences are q₁ and q₂, respectively. q₁≠q₂ (mod N_{ZC}). In addition, the two ZC sequences hold when any two α are used. A cross-correlation coefficient of sequences x₁(d) and x₂(d) whose lengths are D, where d=0, 1, ..., or D-1, is defined as $\left|\frac{1}{D}{\sum }_{d = 0}^{D - 1} {x}_{1} \left(d\right) ⋅ {x}_{2}^{∗} \left(d\right)\right|$. Therefore, when ZC sequences having different root indicators are allocated to different users, and these users transmit the ZC sequences having different root indicators on a same time-frequency resource, interference exists between the users.

After the terminal device obtains an uplink reference signal sequence whose length is M_{ZC}, the terminal device may map the uplink reference signal sequence whose length is M_{ZC} to M_{ZC} subcarriers, to obtain a frequency domain signal that includes M_{ZC} frequencies. Then, the frequency domain signal is converted into a time domain signal in a manner like inverse Fourier transform (inverse discrete Fourier transform, IDFT), and a cyclic prefix (cyclic prefix, CP) is added to the time domain signal to obtain a to-be-sent time domain signal.

For example, the terminal device may map, in ascending order (or descending order) of subcarrier numbers, uplink reference signal sequences ${r}_{u , v}^{\left(α, δ\right)} \left(0\right) , { r}_{u , v}^{\left(α, δ\right)} \left(1\right) , { r}_{u , v}^{\left(α, δ\right)} \left(2\right)$, ..., and ${r}_{u , v}^{\left(α, δ\right)} \left({M}_{ZC}-1\right)$ whose lengths each are M_{ZC} to subcarriers distributed at equal intervals, for example, map the uplink reference signal sequences to M_{ZC} consecutive subcarriers (where numbers of the M_{ZC} consecutive subcarriers are respectively represented as p+0, p+1, ..., and p+M_{ZC}-1, and p is any integer). Alternatively, sequences whose lengths each are M_{ZC} may be mapped to consecutively distributed subcarriers in descending order of subcarrier numbers, for example, the sequences whose lengths each are M_{ZC} are mapped to subcarriers p+M_{ZC}-1, p+M_{ZC}- 2, ..., and p+0.

Optionally, the sequences ${r}_{u , v}^{\left(α, δ\right)} \left(0\right) , { r}_{u , v}^{\left(α, δ\right)} \left(1\right) , { r}_{u , v}^{\left(α, δ\right)} \left(2\right)$, ..., and ${r}_{u , v}^{\left(α, δ\right)} \left({M}_{ZC}-1\right)$ whose lengths each are M_{ZC} may be respectively mapped to subcarriers distributed at equal intervals (where the subcarriers distributed at the equal intervals are respectively represented as p+0, p+2, ..., and p+2(M_{ZC}-1)). For example, the sequences whose lengths each are M_{ZC} are respectively mapped to subcarriers that are spaced by 2fₛ. fₛ represents a width between center frequencies of adjacent subcarriers. Alternatively, the sequences whose lengths each are M_{ZC} may be respectively mapped to subcarriers distributed at equal intervals in descending order of subcarrier numbers. For example, the sequences whose lengths each are M_{ZC} are mapped to subcarriers p+2(M_{ZC}-1), p+2(M_{ZC}-2), ..., and p+0.

Then, the terminal device may perform inverse Fourier transform on the uplink frequency domain reference signal sequence to obtain a corresponding time domain sequence. To eliminate inter-symbol interference, a cyclic prefix is added at a start of a time domain symbol to obtain a to-be-sent time domain signal, and the to-be-sent time domain signal is sent in a radio frequency form. In this case, the terminal device completes sending of the uplink reference signal.

### 3. Sequence group hopping (group hopping) and sequence hopping (sequence hopping)

After a frequency hopping function is enabled, base sequences of different base sequence groups (groups) are used in slots (slots). In addition, a used group is related to a physical number of a cell and a specific channel offset parameter that is configured. For sequence group hopping, in different slots, different groups are used, that is, each slot corresponds to a different u value. This also means that in a same cell, in different slots, base sequences of a same group may be used.

If group hopping is disabled, the u value is related only to a physical cell identifier (physical cell identifier, PCI) and a cell-specific configuration parameter. In this case, all users in the cell use the same u value in any slot.

For sequence hopping, different v values are used. Whether sequence hopping can be used is determined by a cell-specific configuration parameter, and sequence hopping can be used only when no group hopping is used. For a physical uplink control channel (physical uplink control channel, PUCCH), due to a length limitation (which is definitely less than 6 RBs), sequence hopping cannot be used, and for a DMRS on a physical uplink shared channel (physical uplink shared channel, PUSCH), whether to use sequence hopping may be specified by using the cell-specific configuration parameter. However, in this case, a sequence hopping configuration by a specific terminal device covers a cell configuration.

An objective of using sequence group hopping and sequence hopping is to randomize reference signal interference between cells.
(1) The low-PAPR sequence is used in PUCCH formats 0, 1, 3, and 4. In this case, δ = 0. The sequence group number u and the sequence number vare determined according to the following method:
   The sequence group number u = (f_{gh} + fₛₛ) mod 30 , and f_{gh} and fₛₛ are parameters representing sequence group hopping and sequence hopping, and specific values thereof are related to a higher-layer parameter pucch-GroupHopping. The sequence number v is also determined based on the higher-layer parameter pucch-GroupHopping. Details are as follows:

If the higher-layer parameter pucch-GroupHopping is configured as 'neither', that is, sequence group hopping and sequence hopping are disabled (where neither of sequence group hopping and sequence hopping is enabled), f_{gh} = 0, fₛₛ = n_{ID} mod 30, and v = 0.

If the higher-layer parameter pucch-GroupHopping is configured as 'enable', that is, sequence group hopping is enabled, and sequence hopping is disabled, ${f}_{gh} = \left({\sum }_{k = 0}^{7} {2}^{k} c \left(8\left(2{n}_{s , f}^{μ}+{n}_{hop}\right)+k\right)\right) mod 30$ , fₛₛ = n_{ID} mod 30, and v = 0. c(·) represents a pseudo-random sequence, and an initialization parameter (which may be referred to as an initial phase or an initial value) of the pseudo-random sequence ${c}_{init} = \left⌊{n}_{ID}/30\right⌋$.

If the higher-layer parameter pucch-GroupHopping is configured as 'disable', that is, sequence hopping is enabled, sequence group hopping is disabled, f_{gh} = 0, fₛₛ = n_{ID} mod 30, and $v = c \left(2{n}_{s , f}^{μ}+{n}_{hop}\right)$. c(·) represents a pseudo-random sequence, and an initialization parameter of the pseudo-random sequence ${c}_{init} = {2}^{5} \left⌊{n}_{ID}/30\right⌋ + \left({n}_{ID} mod 30\right)$.

In the foregoing formulas, if a higher-layer parameter hoppingId is configured, n_{ID} is indicated by hoppingId; otherwise, ${n}_{ID} = {N}_{ID}^{cell}$, where ${N}_{ID}^{cell}$ is a cell ID. nₕₒₚ represents a frequency hopping index. When intra-slot frequency hopping is disabled, nₕₒₚ = 0, and when intra-slot frequency hopping is enabled, for a first hop, nₕₒₚ = 0; and for a second hop, nₕₒₚ = 1. In addition, ${n}_{s , f}^{μ}$ represents a slot number in one frame (frame) when a subcarrier spacing is configured as µ.

(2) The low-PAPR sequence is used in a DMRS sequence of the PUSCH, and the DMRS sequence r(n) is determined according to the following formula: $r \left(s\right) = {r}_{u , v}^{\left(α, δ\right)} \left(s\right) , and s = 0 , 1 , … , {M}_{sc}^{PUSCH} / {2}^{δ} - 1 .$

δ = 1, the sequence group number $u = \left({f}_{gh}+{n}_{ID}^{RS}\right) mod 30$, and the sequence number v is determined according to the following method:

If both sequence group hopping and sequence hopping are disabled (that is, neither of sequence group hopping and sequence hopping is enabled), f_{gh} = 0, and v = 0.

If sequence group hopping is enabled, and sequence hopping is disabled, ${f}_{gh} = \left({\sum }_{k = 0}^{7} {2}^{k} c \left(8\left({N}_{symb}^{slot}{n}_{s , f}^{μ}+l\right)+k\right)\right) mod 30$ , and v = 0 . c(·) represents a pseudo-random sequence, and an initialization parameter of the pseudo-random sequence ${c}_{init} = \left⌊{n}_{ID}^{RS}/30\right⌋$.

If sequence hopping is enabled, and sequence group hopping is disabled, f_{gh} = 0, and $v = \left\{\begin{matrix}c \left({N}_{symb}^{slot}{n}_{s , f}^{μ}+l\right) & {M}_{ZC} \geq 6 {N}_{sc}^{RB} \\ 0 & otherwise\end{matrix}\right.$. c(·) represents a pseudo-random sequence, and an initialization parameter of the pseudo-random sequence ${c}_{init} = {n}_{ID}^{RS}$.

For PUSCH transmission that is granted by a random access response (random access response, RAR) uplink (uplink, UL) or scheduled by an uplink control information (downlink control information, DCI) format 0_0, a cyclic redundancy check (cyclic redundancy check, CRC) is scrambled by a temporary cell-radio network temporary identifier (temporary cell-radio network temporary identifier, TC-RNTI), enabling statuses of the foregoing sequence group hopping and sequence hopping may be indicated by a higher-layer parameter groupHoppingEnabledTransformPrecoding, and groupHoppingEnabledTransformPrecoding is used to disable sequence hopping and enable or disable group hopping.

For all other transmission, if corresponding higher-layer parameters sequenceHopping and sequenceGroupHopping are provided, sequence hopping and group hopping are enabled or disabled, otherwise, a hopping mode same as that of a message (message, Msg) 3 is used.

In the foregoing formulas, for a method of determining ${n}_{ID}^{RS}$, refer to related descriptions in clause 6.4.1.1.1 in the technical specification (technical specification, TS) 38.211.

Details are not described herein. ${N}_{symb}^{slot}$ represents a quantity of symbols included in one slot. ${N}_{sc}^{RB}$ represents a quantity of subcarriers included in one resource block (RB). Sequence group hopping and sequence hopping are controlled by a higher-layer parameter. For a specific method, refer to related descriptions in clause 6.4.1.1.1 in TS 38.211. Details are not described herein. l represents a symbol index of a DMRS symbol in a slot, or 1 represents a symbol index of a 1^{st} symbol of a double-symbol DMRS in a slot if the DMRS is a double-symbol DMRS.

(3) The low-PAPR sequence is used in an SRS sequence, and the SRS sequence is: ${r}^{\left({p}_{i}\right)} \left(s,l′\right) = {r}_{u , v}^{\left({α}_{i}, δ\right)} \left(s\right) ,$ where $0 \leq s \leq {M}_{sc , b}^{SRS} - 1$, and $l ′ ∈ \left\{0,1,…,{N}_{symb}^{SRS}-1\right\}$.${M}_{sc , b}^{SRS}$ represents a length of the SRS sequence. δ = log₂(K_{TC}). K_{TC} represents a comb quantity, where K_{TC} ∈ {2,4,8}, and is configured by using a higher-layer parameter transmissionComb. pᵢ represents an antenna port number. ${N}_{symb}^{SRS}$ represents a quantity of symbols of an SRS. The sequence group number $u = \left({f}_{gh}\left({n}_{s , f}^{μ},l′\right)+{n}_{ID}^{SRS}\right) mod 30$. The sequence number v is determined according to the following method:

If a higher-layer parameter groupOrSequenceHopping is configured as 'neither', that is, sequence group hopping and sequence hopping are disabled, ${f}_{gh} \left({n}_{s , f}^{μ},l′\right) = 0$, and v = 0.

If the higher-layer parameter groupOrSequenceHopping is configured as 'groupHopping', that is, sequence group hopping is enabled, and sequence hopping is disabled, ${f}_{gh} \left({n}_{s , f}^{μ},l′\right) = \left({\sum }_{k = 0}^{7} c \left(8\left({n}_{s , f}^{μ}{N}_{symb}^{slot}+{l}_{0}+l′\right)+k\right) ⋅ {2}^{k}\right) mod 30$, and v = 0. c(·) represents a pseudo-random sequence, and an initialization parameter of the pseudo-random sequence ${c}_{init} = {n}_{ID}^{SRS}$ .

If the higher-layer parameter groupOrSequenceHopping is configured as 'sequenceHopping', that is, sequence hopping is enabled, and sequence group hopping is disabled, ${f}_{gh} \left({n}_{s , f}^{μ},l′\right) = 0$, and $v = \left\{\begin{matrix}c \left({n}_{s , f}^{μ}{N}_{symb}^{slot}+{l}_{0}+l′\right) & {M}_{sc , b}^{SRS} \geq 6 {N}_{sc}^{RB} \\ 0 & otherwise\end{matrix}\right.$.

In the foregoing formulas, ${n}_{ID}^{SRS}$ represents an ID of the SRS sequence. For details, refer to related descriptions in clause 6.4.1.4.2 in TS 38.211. Details are not described herein. l₀ represents a start symbol index of the SRS in a slot.

For a future-oriented communication system, for example, a 6G communication system, a deployed frequency band is higher, network deployment is denser, and a network capacity is larger, so that a large quantity of users can be supported in accessing a network. However, an uplink signal sequence formed by using the foregoing base sequence cannot be used in uplink communication in a scenario in which cells are denser and/or more users are served. As a result, interference between the users is increased. Therefore, to satisfy an application requirement, how to better implement uplink communication of more users becomes an urgent problem to be resolved.

Therefore, an embodiment of this application provides a communication method, to implement uplink communication of more users.

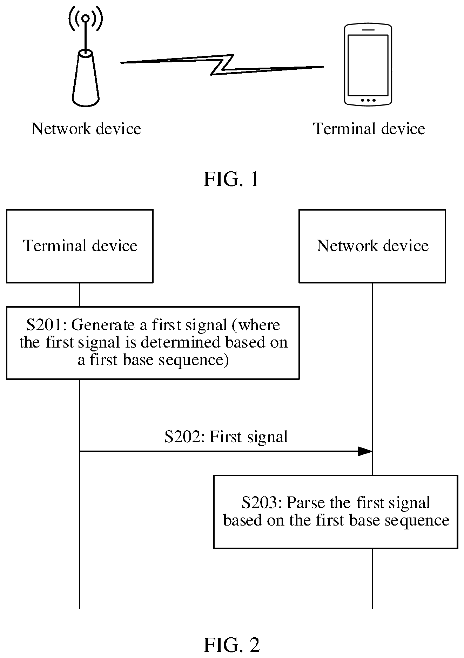

For example, FIG. 1 is a diagram of an architecture of a communication system according to an embodiment of this application. As shown in FIG. 1, the communication system includes a network device and a terminal device. The network device and the terminal device may directly communicate with each other, or may communicate with each other through forwarding by another device. It should be noted that FIG. 1 shows one network device and one terminal device as an example. A quantity of network devices and a quantity of terminal devices are not limited in embodiments of this application.

In embodiments of this application, the network device may also be referred to as an access network (radio access network, RAN) node, an access network device, a RAN entity, an access node, or the like. The network device is located on a network side of the foregoing communication system, to help the terminal device implement wireless access. The network device is a device that has a wireless transceiver function, or may be a chip or a chip system disposed in the device. The network device includes but is not limited to: a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The network device may be a macro base station, a micro base station, an indoor base station, a relay node or a donor node, an open radio access network (open radio access network, ORAN), or a radio controller in a centralized radio access network (centralized radio access network, CRAN) scenario. Optionally, the RAN node may alternatively be a server, a wearable device, a vehicle, a vehicle-mounted device, or the like. For example, the access network device in a V2X technology may be a roadside unit (roadside unit, RSU). All or a part of functions of the network device in this application may alternatively be implemented by using a software function running on hardware, or may be implemented by using an instantiated virtualization function on a platform (for example, a cloud platform). The network device in this application may alternatively be a logical node, a logical module, or software that can implement all or a part of functions of the network device.

In another possible scenario, a plurality of RAN nodes coordinate to assist the terminal device in implementing radio access, and different RAN nodes respectively implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A form of the network device is not limited in embodiments of this application. An apparatus configured to implement a function of the network device may be the network device, or may be an apparatus, for example, a chip system, that can support the network device in implementing the function. The apparatus may be mounted in the network device or used in a manner of matching the network device.

The terminal device in embodiments of this application is a terminal that accesses the foregoing communication system and has a wireless transceiver function, or a chip or a chip system that may be disposed in the terminal. The terminal device may also be referred to as user equipment (user equipment, UE), a user apparatus, an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU with a terminal function, or the like. The terminal device in this application may be alternatively a vehicle-mounted module, a vehicle-mounted assembly, a vehicle-mounted part, a vehicle-mounted chip, or a vehicle-mounted unit that is built in a vehicle as one or more parts or units. The vehicle may use the vehicle-mounted module, the vehicle-mounted assembly, the vehicle-mounted part, the vehicle-mounted chip, or the vehicle-mounted unit that is built in the vehicle, to implement a method provided in this application.

A device form of the terminal is not limited in embodiments of this application. An apparatus configured to implement a function of the terminal device may be the terminal device, or may be an apparatus, for example, a chip system that can support the terminal device in implementing the function. The apparatus may be mounted in a terminal device or used in a manner of matching the terminal device. In this embodiment of this application, the chip system may include a chip, or may include a chip and another discrete component.

It should be noted that the solutions in embodiments of this application may also be applied to another communication system, and a corresponding name may also be replaced with a name of a corresponding function in the another communication system.

The following specifically describes, with reference to FIG. 2, the communication method provided in embodiments of this application.

For example, FIG. 2 is a schematic flowchart of a communication method according to an embodiment of this application. Communication between the network device and the terminal device shown in FIG. 1 is used as an example for description. Certainly, an action of the terminal device in the method may alternatively be performed by an apparatus or a module in the terminal device, for example, a chip, a processor, or a processing unit in the terminal device. An action of the network device in the method may alternatively be performed by an apparatus or a module in the network device, for example, a chip, a processor, or a processing unit in the network device. This is not specifically limited in embodiments of this application.

As shown in FIG. 2, the communication method includes the following steps.

S201: The terminal device generates a first signal.

S202: The terminal device sends the first signal to the network device. Correspondingly, the network device receives the first signal from the terminal device.

S203: The network device parses the first signal based on a first base sequence.

The following separately describes S201 and S203. For S201:

In this embodiment of this application, the first signal is determined based on the first base sequence, the first base sequence is a base sequence in a first base sequence group of N base sequence groups, and the first base sequence group includes K base sequences. In other words, each base sequence group includes K base sequences, and the first base sequence is one of the K base sequences in one base sequence group selected from the N base sequence groups. A quantity N of base sequence groups and a quantity K of base sequences in each base sequence group may be predefined or preconfigured in a protocol, or may be configured by the network device for the terminal device. This is not limited herein.

It should be understood that the first signal is an uplink physical layer signal, like a PUCCH, a DMRS, or an SRS. For different types of first signals, the terminal device generates the first signal in different manners based on the first base sequence. For details, refer to related descriptions in the foregoing related technology 3 "sequence group hopping and sequence hopping". Details are not described herein again. Correspondingly, for first signals of a same type, first signals formed by base sequences in different base sequence groups are also different. For a manner of determining a group number of the first base sequence group where the first base sequence generating the first signal is located and a sequence number of the first base sequence in the first base sequence group, refer to the descriptions in the following solution.

In this embodiment of this application, group numbers of the N base sequence groups are consecutively numbered from 0, that is, the group numbers of the N base sequence groups are 0 to N-1, and the sequence numbers of the K base sequences are also consecutively numbered from 0, that is, the sequence numbers of the K base sequences are 0 to K-1. In addition, it should be understood that, in some possible implementations, the group numbers of the N base sequence groups and the sequence numbers of the K base sequences may alternatively be consecutively numbered from 1, that is, the group numbers of the N base sequence groups are 1 to N, and the sequence numbers of the K base sequences are 1 to K. This is not limited herein.

In a possible design solution 1, the quantity N of base sequence groups is greater than 30, that is, N>30, where N is an integer.

In the design solution 1, in a possible implementation 1, the base sequence group K is a positive integer less than or equal to 2, that is, 1≤K≤2. In this case, the quantity of base sequence groups is expanded, but the quantity of base sequences in the base sequence group is not expanded, to increase a quantity of sequence group hopping.

In a possible implementation 2, K is an integer greater than 2, that is, K>2. In this case, both the quantity of base sequence groups and the quantity of base sequences in the base sequence group are expanded, to increase a quantity of sequence group hopping and a quantity of sequence hopping.

In the design solution 1, the quantity N of base sequence groups may satisfy the following value: N=30 × a, where a is an integer greater than 1. In other words, N is an integer multiple of 30, and the integer multiple is not 1. For example, if a=2, 4, or 6, N=60, 120, or 180.

In a possible design solution 2, the quantity N of base sequence groups is 30, that is, N=30. In this design solution, K is an integer greater than 2, that is, K>2. In this case, the quantity of base sequences in the base sequence group is expanded, but the quantity of base sequence groups is not expanded, to increase a quantity of sequence hopping.

In this design solution 2, it may also be considered that N is an integer multiple of 30, but the integer multiple is 1, that is, a = 1.

For the foregoing design solution 1 and design solution 2, the quantity K of base sequences may satisfy the following value: K=2ⁿ, and n is an integer greater than or equal to 0. In other words, in the implementation 1 in the foregoing design solution 1, that is, when N>30 and 1≤K≤2, n=0 or 1, that is, K=1 or 2. In the implementation 2, that is, when N>30 and K>2, and in the foregoing design solution 2, that is, when N=30 and K>2, n is an integer greater than 1. For example, if n=2, 3, or 4, K=4, 8, or 16.

For the foregoing two design solutions, a length ${M}_{ZC} = {mN}_{sc}^{RB} / {2}^{δ}$ of the first base sequence satisfies the following conditions: N_{ZC} is a maximum prime number less than M_{ZC}, and N_{ZC} ≥ KM, where ${N}_{sc}^{RB}$ represents a quantity of subcarriers included in one resource element (for example, an RB), m is used to determine M_{ZC}, is a positive integer, and may be understood as an integer multiple of ${N}_{sc}^{RB} / {2}^{δ}$. A value of δ is related to a type of the first signal like a value of δ when an uplink signal is a "PUCCH", a "DMRS", or an "SRS" in the foregoing related technology 3. N_{ZC} represents a length of a first ZC sequence. Therefore, it can be ensured that a quantity of ZC sequences is sufficient to support capacity expansion of sequence hopping.

When the length M_{ZC} of the first base sequence satisfies the foregoing conditions, the first base sequence may be determined based on the first ZC sequence, and the first ZC sequence is determined based on a first root index and the length of the first ZC sequence.

In a possible case, when N>30, if a first condition is satisfied, the first base sequence may also be determined based on the first ZC sequence. The first condition is any one of the following: the length of the first ZC sequence is greater than or equal to a first threshold, the length of the first base sequence is greater than the first threshold, or the length of the first base sequence is greater than or equal to the first threshold. It should be understood that the length of the first base sequence still satisfies ${M}_{ZC} = {mN}_{sc}^{RB} / {2}^{δ}$.

In this case, the first threshold G may satisfy any one of the following: G=K×M, G≥K×M and G is an integer multiple of ${N}_{sc}^{RB}$, G≥K×M and G is an integer multiple of ${N}_{sc}^{RB} / 2$, G≥K×M and G is an integer multiple of ${N}_{sc}^{RB} / {2}^{δ}$, G is an integer multiple of ${N}_{sc}^{RB}$ and G is a minimum value greater than or equal to K×M, G is an integer multiple of ${N}_{sc}^{RB} / 2$ and G is a minimum value greater than or equal to K×M, or G is an integer multiple of ${N}_{sc}^{RB} / {2}^{δ}$ and G is a minimum value greater than or equal to K×M.

In this embodiment of this application, the first ZC sequence is one of N_{ZC}- 1 ZC sequences, and a length of each of the N_{ZC}- 1 ZC sequences is N_{ZC}, that is, the length of the first ZC sequence is N_{ZC}, and N_{ZC} is an integer. Different ZC sequences correspond to different root indexes, and the first root index is a root index of the first ZC sequence. In other words, the root index of the first ZC sequence is one of N_{ZC} - 1 root indexes, and a specific value of the first ZC sequence is related to the root index.

For example, the first base sequence is r̅_{u,v}(·) = {r̅_{u,v}(0),...,r̅_{u,v}(M_{ZC}- 1)}. Any element r̅_{u,v}(s) in r̅_{u,v}, where 0 ≤ s < M_{ZC}, is obtained through calculation in the following manner:

r̅_{u,v}(s) = x_{q}(s mod N_{ZC}), and ${x}_{q} \left(j\right) = {e}^{- j \frac{πqj \left(j+1\right)}{{N}_{ZC}}}$. x_{q}(j) is a j^{th} element in the first ZC sequence, and q is the first root index.

For the first root index, the first root index may be determined based on the group number of the first base sequence group, the sequence number of the first base sequence in the first base sequence group (hereinafter referred to as the sequence number of the first base sequence), the length of the first ZC sequence, and a first parameter value.

For example, $q = \left⌊\overline{q}+1/2\right⌋ + v ⋅ {\left(-1\right)}^{\left⌊2\overline{q}\right⌋}$, and q̅ = N_{ZC} · (u + 1)/M . v is the sequence number of the first base sequence. u is the group number of the first base sequence group. M is the first parameter value. N_{ZC} is the length of the first ZC sequence.

An association relationship exists between the first parameter value M and the quantity N of base sequence groups. Specifically, the association relationship between the first parameter value and N is: M≥N+1. In this embodiment of this application, when a quantity of ZC sequences does not change, M increases as a value of N increases. In a specific example, M=N+1.

It should be understood that, when the quantity N of base sequence groups is known, the first parameter value M may be determined based on the quantity N of base sequence groups, or when the first parameter value M is known, the quantity N of base sequence groups may be determined based on the first parameter value M.

For example, values of N and M may be (60,61), (90,91), (120,121), (150,151), or the like.

In some specific examples, M_{ZC} ≥ 144, N_{ZC} = 139, N=30, M=31, and K=4; or M_{ZC} ≥ 144, N_{ZC} = 139, N=60, M=61, and K=2; or M_{ZC} ≥ 252, N_{ZC} = 251, N=60, M=61, and K=4.

Therefore, the quantity N of the base sequence groups is increased, so that selectivity of the first base sequence group is increased, the quantity of sequence group hopping is increased, and it is ensured that the selected first base sequence is still formed by the first ZC sequence in a preset quantity (for example, N_{ZC}-1) of ZC sequences, and N_{ZC} is a length of each ZC sequence, or it may be understood that the first base sequence is the first ZC sequence selected from the preset quantity of ZC sequences. In addition, when sequence group hopping is enabled, it can be ensured that the first base sequence selected from each base sequence group of the N base sequence groups is different, and the preset quantity of ZC sequences may be (approximately) evenly allocated to the N base sequence groups, to ensure the cross-correlation between the sequences.

The group number u of the first base sequence group and the sequence number v of the first base sequence may be determined by the terminal device based on a related parameter configured by the network device.

The group number u of the first base sequence group may be determined based on a first parameter, a second parameter, and the quantity N of base sequence groups, that is u = (A + B) mod N, where A is the first parameter, and B is the second parameter.

Based on different types of the first signal, the first parameter is different from the second parameter, and values of the first parameter and the second parameter are related to different values of a higher-layer parameter. The higher-layer parameter indicates enabling statuses of sequence group hopping and sequence hopping. Different values of the higher-layer parameter correspond to different enabling statuses.

An example in which the first signal is a PUCCH is used. The first parameter and the second parameter are f_{gh} and fₛₛ, respectively, that is, u = (f_{gh} + fₛₛ) mod N. The higher-layer parameter may be pucch-GroupHopping. In different values of pucch-GroupHopping, f_{gh} and fₛₛ are calculated in different manners.

(1) If pucch-GroupHopping is configured as 'neither', that is, sequence group hopping and sequence hopping are disabled, f_{gh} = 0, and fₛₛ = n_{ID} mod N.

(2) If pucch-GroupHopping is configured as 'enable', that is, sequence group hopping is enabled, and sequence hopping is disabled, ${f}_{gh} = \left({\sum }_{k = 0}^{7} {2}^{k} c \left(8\left(2{n}_{s , f}^{μ}+{n}_{hop}\right)+k\right)\right) mod N$, and fₛₛ = n_{ID} mod N.

(3) If pucch-GroupHopping is configured as 'disable', that is, sequence hopping is enabled, and sequence group hopping is disabled, f_{gh} = 0, and fₛₛ = n_{ID} mod N.

For meanings of f_{gh}, fₛₛ, n_{ID}, ${n}_{s , f}^{μ}$, and nₕₒₚ, refer to descriptions of the PUCCH in the foregoing related technology 3. Details are not described herein again.

An example in which the first signal is a DMRS is used. The first parameter and the second parameter are f_{gh} and ${n}_{ID}^{RS}$, respectively, that is, $u = \left({f}_{gh}+{n}_{ID}^{RS}\right) mod N$. The higher-layer parameter may be groupHoppingEnabledTransformPrecoding, or the higher-layer parameter may be sequenceHopping and sequenceGroupHopping. In different enabling statuses of sequence group hopping and sequence hopping, f_{gh} is calculated in different manners.
(1) If sequence group hopping and sequence hopping are disabled, f_{gh} = 0.
(2) If sequence group hopping is enabled, and sequence hopping is disabled, ${f}_{gh} = \left({\sum }_{k = 0}^{7} {2}^{k} c \left(8\left({N}_{symb}^{slot}{n}_{s , f}^{μ}+l\right)+k\right)\right) mod N$ .
(3) If sequence hopping is enabled, and sequence group hopping is disabled, f_{gh} = 0.

For meanings of ${n}_{ID}^{RS} {, N}_{symb}^{slot} , { n}_{s , f}^{μ}$, l, and c(·), refer to descriptions of the DMRS in the foregoing related technology 3. Details are not described herein again.

An example in which the first signal is an SRS is used. The first parameter and the second parameter are ${f}_{gh} \left({n}_{s , f}^{μ},l′\right)$ and ${n}_{ID}^{SRS}$, respectively. The first parameter is determined by f_{gh}, ${n}_{s , f}^{μ}$, and l' , that is, $u = \left({f}_{gh}\left({n}_{s , f}^{μ},l′\right)+{n}_{ID}^{SRS}\right) mod N$. The higher-layer parameter is groupOrSequenceHopping. In different values of groupOrSequenceHopping, ${f}_{gh} \left({n}_{s , f}^{μ},l′\right)$ is calculated in different manners.
(1) If groupOrSequenceHopping is configured as 'neither', that is, sequence group hopping and sequence hopping are disabled, ${f}_{gh} \left({n}_{s , f}^{μ},l′\right) = 0$.
(2) If groupOrSequenceHopping is configured as 'groupHopping', that is, sequence group hopping is enabled, and sequence hopping is disabled, ${f}_{gh} \left({n}_{s , f}^{μ},l′\right) = \left({\sum }_{k = 0}^{7} c \left(8\left({n}_{s , f}^{μ}{N}_{symb}^{slot}+{l}_{0}+l′\right)+k\right) ⋅ {2}^{k}\right) mod N$ .
(3) If groupOrSequenceHopping is configured as 'sequenceHopping', that is, sequence hopping is enabled, and sequence group hopping is disabled, ${f}_{gh} \left({n}_{s , f}^{μ},l′\right) = 0$.

For meanings of f_{gh}, ${n}_{s , f}^{μ}$, 1', ${n}_{ID}^{SRS} {, N}_{symb}^{slot}$, l₀, and c(·), refer to descriptions of the SRS in the foregoing related technology 3. Details are not described herein again.

In other words, when N=30, a manner of determining the group number u of the first base sequence group is consistent with the implementation in the related technology 3. When N>30, it is only necessary to replace "30" in the related technology 3 with "a value greater than 30 of N" for calculation.

A manner of determining the sequence number v of the first base sequence is also related to a higher-layer parameter that is configured by the network device and that indicates the enabling statuses of sequence group hopping and sequence hopping. For example, in the foregoing examples, when the first signal is a PUCCH, the higher-layer parameter is pucch-GroupHopping; when the first signal is a DMRS, the higher-layer parameter is groupHoppingEnabledTransformPrecoding, or the higher-layer parameter is sequenceHopping and sequenceGroupHopping; and when the first signal is an SRS, the higher-layer parameter is groupOrSequenceHopping.

When K=1 or 2, a manner of determining v is consistent with the descriptions in the foregoing related technology 3. When K>2, the terminal device may determine v in the following two manners:
Manner 1: The sequence number of the first base sequence is determined based on one element in each of n pseudo-random sequences.

n=log₂ K, that is, a value of n is related to a value of K. The pseudo-random sequence may be an m-sequence, a gold sequence, or the like. This is not limited herein. In other words, the terminal device may select one element from each of the n pseudo-random sequences, to obtain n elements, the n elements are represented as {c₀, c₁, c₂, ..., cₙ₋₁}, and the sequence number v of the first base sequence is obtained through calculation based on the n elements.

In a possible implementation, the sequence number of the first base sequence may satisfy the following relationship: v = 2ⁿ⁻¹ × cₙ₋₁ + 2ⁿ⁻² × cₙ₋₂+...+2⁰ × c₀. In other words, after separately selecting one element from each of the n pseudo-random sequences, the terminal device may perform binary-to-decimal conversion processing on the obtained n elements, to obtain the sequence number v of the first base sequence.

For any element cᵢ in the n elements (that is, one element in an i^{th} pseudo-random sequence cᵢ(·) in the n pseudo-random sequences), 0 ≤ i ≤ n- 1, and i is an integer. For different types of first signals, manners of determining cᵢ are also different. Specific examples are as follows:

An example in which the first signal is a PUCCH is used. ${c}_{i} = {c}_{i} \left(2{n}_{s , f}^{μ}+{n}_{hop}\right)$. ${c}_{init , i} = {2}^{5} \left⌊\left({n}_{ID}+i\right)/N\right⌋ + \left(\left({n}_{ID}+i\right) mod N\right)$. c_{init,i} represents an initial phase of cᵢ(·). ${n}_{s , f}^{μ}$ represents a slot number in one system frame when a subcarrier spacing is configured as µ. nₕₒₚ represents a frequency hopping index. n_{ID} represents an identifier of a cell in which the terminal device is located.

It can be learned that, when the first signal is a PUCCH, the terminal device may determine one element from each of the n pseudo-random sequences based on ${n}_{s , f}^{μ}$ and nₕₒₚ. An element number of the element is ${2 n}_{s , f}^{μ} + {n}_{hop}$. A sequence number of the first base sequence forming the PUCCH may be obtained through calculation based on elements whose element numbers are ${2 n}_{s , f}^{μ} + {n}_{hop}$ in the n different pseudo-random sequences.

An example in which the first signal is a DMRS is used. ${c}_{i} = {c}_{i} \left({N}_{symb}^{slot}{n}_{s , f}^{μ}+l\right) {c}_{init , i} = {n}_{ID}^{RS} + i$ . c_{init,i} represents an initial phase of cᵢ(·). ${n}_{ID}^{RS}$ represents an identifier of a DMRS sequence. ${n}_{s , f}^{μ}$ represents a slot number in one system frame when a subcarrier spacing is configured as µ. ${N}_{symb}^{slot}$ represents a quantity of symbols included in one slot. 1 represents a symbol index of a DMRS symbol in the slot.

It can be learned that, when the first signal is a DMRS, the terminal device may determine one element from each of the n pseudo-random sequences based on ${N}_{symb}^{slot} , { n}_{s , f}^{μ}$, and 1. An element number of the element is ${N}_{symb}^{slot} {n}_{s , f}^{μ} + l$. A sequence number of the first base sequence forming the DMRS may be obtained through calculation based on elements whose element numbers are ${N}_{symb}^{slot} {n}_{s , f}^{μ} + l$ in the n different pseudo-random sequences.

An example in which the first signal is an SRS signal is used. ${c}_{i} = {c}_{i} \left({N}_{symb}^{slot}{n}_{s , f}^{μ}+{l}_{0}+l′\right)$ . ${c}_{init , i} = {n}_{ID}^{SRS} + i$. c_{init,i} represents an initial phase of cᵢ(·). ${n}_{ID}^{SRS}$ represents an identifier of an SRS sequence. ${n}_{s , f}^{μ}$ represents a slot number in one system frame when a subcarrier spacing is configured as µ. ${N}_{symb}^{slot}$ represents a quantity of symbols included in one slot. l₀ represents a start symbol index of the SRS in the slot. $l ′ ∈ \left\{0,1,…,{N}_{symb}^{SRS}-1\right\}$. ${N}_{symb}^{SRS}$ represents a quantity of symbols of the SRS.

It can be learned that, when the first signal is an SRS, the terminal device may determine one element from each of the n pseudo-random sequences based on ${N}_{symb}^{slot} , { n}_{s , f}^{μ}$, l₀, and l'. An element number of the element is ${N}_{symb}^{slot} {n}_{s , f}^{μ} + {l}_{0} + l ′$. A sequence number of the first base sequence forming the SRS may be obtained through calculation based on elements whose element numbers are ${N}_{symb}^{slot} {n}_{s , f}^{μ} + {l}_{0} + l ′$ in the n different pseudo-random sequences.

It should be understood that, in some possible cases, v = 2⁰ × cₙ₋₁ + 2¹ × cₙ₋₂ + ··· + 2ⁿ⁻¹ × c₀. In addition, in this embodiment of this application, for different types of first signals, the n pseudo-random sequences for determining a value of v may be different.

Manner 2: The sequence number of the first base sequence is determined based on n elements in one pseudo-random sequence.

n=log₂ K. In other words, the terminal device may alternatively select n elements from one pseudo-random sequence, to calculate the sequence number of the first base sequence. A calculation manner thereof is the same as that in Manner 1, that is, binary-to-decimal conversion processing is performed on the n elements, to obtain the sequence number v of the first base sequence. Optionally, numbers of the n elements may be consecutively arranged in the pseudo-random sequence, or numbers of the n elements are arranged at equal intervals in the pseudo-random sequence.

For any element cᵢ in the n elements (that is, an i^{th} element in a pseudo-random sequence c(·)), 0 ≤ i ≤ n- 1, and i is an integer. For different types of first signals, manners of determining cᵢ are also different. Specific examples are as follows:

An example in which the first signal is a PUCCH is used. ${c}_{i} = c \left(2\left(n\times {n}_{s , f}^{μ}+i\right)+{n}_{hop}\right)$ , or ${c}_{i} = c \left(n\left(2\times {n}_{s , f}^{μ}+{n}_{hop}\right)+i\right)$. For definitions and descriptions of ${n}_{s , f}^{μ}$ and nₕₒₚ, refer to the descriptions in the foregoing solution. Details are not described herein again.

An example in which the first signal is a DMRS is used. ${c}_{i} = c \left({N}_{symb}^{slot}\left(n\times {n}_{s , f}^{μ}+i\right)+l\right)$, or ${c}_{i} = c \left(n\left({N}_{symb}^{slot}\times {n}_{s , f}^{μ}+l\right)+i\right)$. For definitions and descriptions of ${n}_{s , f}^{μ} , { N}_{symb}^{slot}$, and l, refer to the descriptions in the foregoing solution. Details are not described herein again.

An example in which the first signal is an SRS is used. ${c}_{i} = c \left({N}_{symb}^{slot}\left(n\times {n}_{s , f}^{μ}+i\right)+{l}_{0}+l′\right)$ , or ${c}_{i} = c \left(n\left({N}_{symb}^{slot}\times {n}_{s , f}^{μ}+{l}_{0}+l′\right)+i\right)$. For definitions of ${n}_{s , f}^{μ} , { N}_{symb}^{slot}$, l₀, and 1', refer to the descriptions in the foregoing solution. Details are not described herein again.

It can be learned from the foregoing that n different elements may be determined from one pseudo-random sequence based on different values of i. In the foregoing two manners, when K is greater than 2, the sequence number of the first base sequence forming the first signal may be determined, so that the sequence number of the first base sequence may be one of 0, 1, 2, ..., and n-1. In addition, randomness of the sequence number is ensured, thereby ensuring cross-correlation between sequences that undergo sequence hopping.

The terminal device may obtain the sequence number of the first base sequence and the group number of the first base sequence group based on the related parameter configured by the network device, to determine the first ZC sequence; obtain the first base sequence based on the first ZC sequence; and generate an uplink signal sequence, for example, an SRS sequence, based on the first base sequence by selecting a cyclic shift value. Further, the terminal device may map the generated uplink signal sequence to a subcarrier to obtain a frequency domain signal, and convert the frequency domain signal into a time domain signal in a manner like inverse Fourier transform (inverse discrete Fourier transform, IDFT). To eliminate inter-symbol interference, the terminal device may further add a cyclic prefix (cyclic prefix, CP) to the time domain signal to obtain a to-be-sent time domain signal, and send the time domain signal in a radio frequency form by using an antenna.

It should be understood that a length of the generated uplink signal sequence may be the same as the length of the first base sequence, or may be different from the length of the first base sequence. In addition, when the uplink signal is processed, in addition to the foregoing mapping and frequency-time domain transformation processes, other processing processes such as scrambling and modulation may be further included. This is not limited herein.

It should be further understood that, when the first signal is a PUCCH, PUCCHs in different formats (formats) are generated in different manners based on the first base sequence, and the PUCCHs in different formats carry different uplink control information. For a specific implementation process, refer to related descriptions in an existing implementation. Details are not described herein.

In a scenario in which a plurality of terminal devices perform uplink communication simultaneously, as a quantity of base sequence groups and/or a quantity of base sequences in a base sequence group increase/increases, the plurality of terminal devices may use more base sequences in different base sequence groups to send uplink signals (that is, sequence group hopping), or the plurality of terminal devices may use more different base sequences in a same base sequence group to send uplink signals (that is, sequence hopping), so that the network device can distinguish the uplink signals sent by different terminal devices.

For S203:
After receiving the first signal, the network device obtains the first base sequence in a same calculation manner as that of the terminal device based on the parameter configured for the terminal device, and parses the first signal based on the first base sequence.

In some implementations, the network device may perform channel estimation based on the first signal, to obtain uplink channel information. For example, the first signal is an SRS. Alternatively, the network device may perform data demodulation based on the first signal, to obtain information carried by the first signal. For example, if the first signal is a PUCCH, the network device may perform parsing based on the first base sequence to obtain uplink control information (uplink control information, UCI) carried by the PUCCH.

Based on the communication method shown in FIG. 2, the quantity of base sequence groups and/or the quantity of base sequences in the base sequence group are/is expanded, so that more quantities of sequence group hopping and/or sequence hopping can be increased when cross-correlation of the sequences is ensured. Therefore, more users can be enabled to perform uplink communication in a scenario in which cells are denser and/or more users are served, and interference of sending uplink signals between different users can be reduced.

It may be understood that, in the foregoing embodiments, the method and/or the steps implemented by the network device may alternatively be implemented by a part (for example, a processor, a chip, a chip system, a circuit, a logical module, or software) that can be used in the network device, and the method and/or the steps implemented by the terminal device may alternatively be implemented by a part (for example, a processor, a chip, a chip system, a circuit, a logical module, or software) that can be used in the terminal device.

The foregoing mainly describes the solutions provided in this application. Correspondingly, this application further provides a communication apparatus. The communication apparatus is configured to implement various methods in the foregoing method embodiments. The communication apparatus may be the network device in the foregoing method embodiments, an apparatus including the network device, or a part that can be used in the network device, for example, a chip or a chip system. Alternatively, the communication apparatus may be the terminal device in the foregoing method embodiments, an apparatus including the terminal device, or a part that can be used in the terminal device, for example, a chip or a chip system.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes outside the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

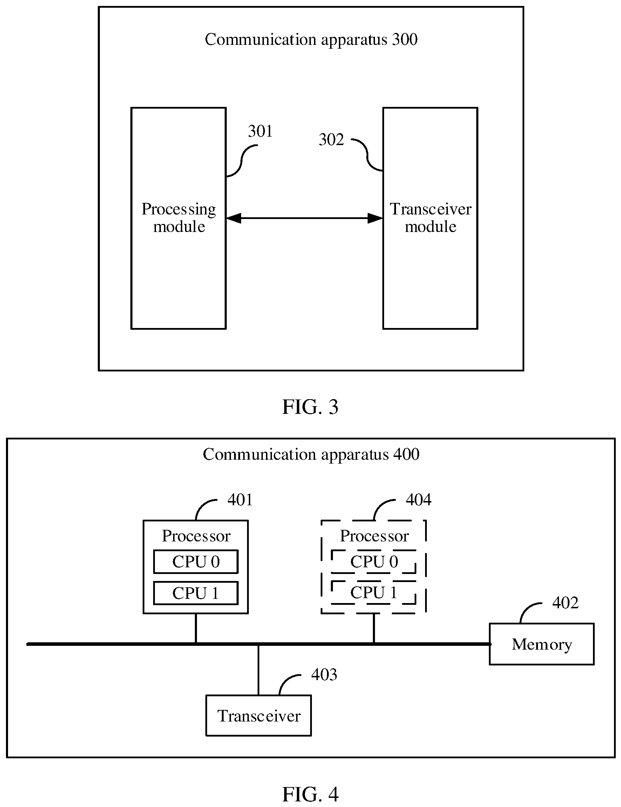

An example in which the communication apparatus is the network device or the terminal device in the foregoing method embodiments is used. FIG. 3 is a diagram of a structure of a communication apparatus according to an embodiment of this application. As shown in FIG. 3, the communication apparatus 300 includes a processing module 301 and a transceiver module 302. The processing module 301 is configured to perform a processing function of the network device or the terminal device in the foregoing method embodiments. The transceiver module 302 is configured to perform a transceiver function of the network device or the terminal device in the foregoing method embodiments.

All related content of the steps in the foregoing method embodiments may be cited in function descriptions of the corresponding functional modules. Details are not described herein again. The communication apparatus 300 provided in this embodiment can perform the foregoing method. Therefore, for technical effects that can be achieved by the communication apparatus 300, refer to the foregoing method embodiments. Details are not described herein again.

In a possible design solution, in this embodiment of this application, the transceiver module 302 may include a receiving module and a sending module (not shown in FIG. 3). The transceiver module is configured to implement a sending function and a receiving function of the communication apparatus 300.

In a possible design solution, the communication apparatus 300 may further include a storage module (not shown in FIG. 3), and the storage module stores a program or instructions. When the processing module 301 executes the program or the instructions, the communication apparatus 300 is caused to perform a function of the network device or the terminal device in the method shown in FIG. 2.

It should be understood that the processing module 301 in the communication apparatus 300 may be implemented by a processor or a processor-related circuit component, and may be a processor or a processing unit; and the transceiver module 302 may be implemented by a transceiver or a transceiver-related circuit component, and may be a transceiver or a transceiver unit.

For example, FIG. 4 is a diagram of a structure of another communication apparatus according to an embodiment of this application. The communication apparatus may be a network device or a terminal device, or may be a chip (system) or another part or component that can be disposed in the network device or the terminal device. As shown in FIG. 4, the communication apparatus 400 may include a processor 401. In a possible design solution, the communication apparatus 400 may further include a memory 402 and/or a transceiver 403. The processor 401 is coupled to the memory 402 and the transceiver 403, for example, may be connected to the memory 402 and the transceiver 403 through a communication bus.

The following specifically describes the parts of the communication apparatus 400 with reference to FIG. 4.

The processor 401 is a control center of the communication apparatus 400, and may be one processor, or may be a collective term of a plurality of processing elements. For example, the processor 401 is one or more central processing units (central processing units, CPUs), may be an application-specific integrated circuit (application-specific integrated circuit, ASIC), or may be one or more integrated circuits configured to implement embodiments of this application, for example, one or more microprocessors (digital signal processors, DSPs), or one or more field programmable gate arrays (field programmable gate arrays, FPGAs).

In a possible design solution, the processor 401 may perform various functions of the communication apparatus 400 by running or executing a software program stored in the memory 402 and invoking data stored in the memory 402.

During specific implementation, in an embodiment, the processor 401 may include one or more CPUs, for example, a CPU 0 and a CPU 1 shown in FIG. 4.

During specific implementation, in an embodiment, the communication apparatus 400 may include a plurality of processors, for example, the processor 401 and a processor 404 shown in FIG. 4. Each of the processors may be a single-core processor (single-CPU), or may be a multicore processor (multi-CPU). The processor herein may be one or more devices, circuits, and/or processing cores configured to process data (for example, computer program instructions).

The memory 402 is configured to store the software program for performing the solutions of this application, and the processor 401 controls execution of the software program. For a specific implementation, refer to the foregoing method embodiment. Details are not described herein again.

In a possible design solution, the memory 402 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 402 may be integrated with the processor 401, or may exist separately, and is coupled to the processor 401 through an interface circuit (not shown in FIG. 4) of the communication apparatus 400. This is not specifically limited in embodiments of this application.

The transceiver 403 is configured to communicate with another communication apparatus. For example, the communication apparatus 400 is a terminal device, and the transceiver 403 may be configured to communicate with an access network device or communicate with another terminal device. For another example, the communication apparatus 400 is the network device, and the transceiver 403 may be configured to communicate with a terminal device or communicate with another network device.

In a possible design solution, the transceiver 403 may include a receiver and a transmitter (not separately shown in FIG. 4). The receiver is configured to implement a receiving function, and the transmitter is configured to implement a sending function.

In a possible design solution, the transceiver 403 may be integrated with the processor 401, or may exist independently, and is coupled to the processor 401 through an interface circuit (not shown in FIG. 4) of the communication apparatus 400. This is not specifically limited in embodiments of this application.

It should be noted that the structure of the communication apparatus 400 shown in FIG. 4 does not constitute a limitation on the communication apparatus. An actual communication apparatus may include more or fewer parts than those shown in the figure, or some parts may be combined, or different part deployment may be used.

In addition, for technical effects of the communication apparatus 400, refer to the technical effects of the method in the foregoing method embodiments. Details are not described herein again.

An embodiment of this application further provides a computer-readable storage medium. The computer-readable storage medium stores a computer program or instructions. When the computer program or the instructions are executed by a computer, functions of the foregoing method embodiments are implemented.

An embodiment of this application further provides a computer program product. When the computer program product is executed by a computer, functions of the foregoing method embodiments are implemented.

All or a part of the foregoing embodiments may be implemented by using software, hardware, firmware, or any combination thereof. When a software program is used to implement embodiments, all or a part of embodiments may be implemented in a form of a computer program product. The computer program product includes one or more computer instructions. When the computer program instructions are loaded and executed on a computer, all or a part of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state disk, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes outside the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, technical solutions of this application essentially, or the part contributing to the conventional technology, or a part of the technical solutions may be implemented in a form of a software product. The computer software product is stored in a storage medium, and includes a plurality of instructions for instructing a computer device (which may be a personal computer, a server, an access network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not indicate that these measures cannot be combined to produce a better effect.

Although this application is described with reference to specific features and embodiments thereof, it is clear that various modifications and combinations may be made without departing from the spirit and scope of this application. Correspondingly, the specification and accompanying drawings are merely example description of this application defined by the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that such modifications and variations fall within the scope of protection defined by the following claims of this application and equivalent technologies thereof.

## Claims

1. A communication method, comprising:
generating a first signal, wherein the first signal is determined based on a first base sequence, the first base sequence is a base sequence in a first base sequence group of N base sequence groups, and the first base sequence group comprises K base sequences, wherein when N is an integer greater than 30, K is a positive integer; and when N is equal to 30, K is an integer greater than 2; and
sending the first signal.

2. A communication method, comprising:
receiving a first signal; and
parsing the first signal based on a first base sequence, wherein the first base sequence is a base sequence in a first base sequence group of N base sequence groups, and the first base sequence group comprises K base sequences, wherein when N is an integer greater than 30, K is a positive integer; and when N is equal to 30, K is an integer greater than 2.

3. The method according to claim 1 or 2, wherein the first base sequence is determined based on a first ZC sequence; the first ZC sequence is determined based on a first root index and a length of the first ZC sequence; the first root index is determined based on a group number of the first base sequence group, a sequence number of the first base sequence in the first base sequence group, the length of the first ZC sequence, and a first parameter value; and the first parameter value is associated with N.

4. The method according to claim 3, wherein N is an integer greater than 30, N=30 × a, and a is an integer greater than 1.

5. The method according to claim 4, wherein the first parameter value satisfies any one of the following: M=31 × b, M is greater than 31 and is a prime number, or M is a maximum prime number less than or equal to 31 × b, wherein M is the first parameter value, and b is an integer greater than 1.

6. The method according to any one of claims 3 to 5, wherein the first parameter value satisfies the following relationship: M≥N+1, and M is the first parameter value.

7. The method according to claim 3, wherein N=30, M=31, and M is the first parameter value.

8. The method according to any one of claims 3 to 7, wherein K=2ⁿ, and n is an integer greater than or equal to 0.

9. The method according to any one of claims 3 to 8, wherein a length of the first base sequence satisfies the following conditions: N_{ZC} is a maximum prime number less than M_{ZC}, and N_{ZC} ≥ KM, wherein N_{ZC} represents the length of the first ZC sequence, and M_{ZC} represents the length of the first base sequence.

10. The method according to any one of claims 1 to 9, wherein when K is an integer greater than 2, the sequence number of the first base sequence in the first base sequence group is determined based on one element in each of n pseudo-random sequences, and n=log₂ K.

11. The method according to any one of claims 1 to 9, wherein when K is an integer greater than 2, the sequence number of the first base sequence in the first base sequence group is determined based on n elements in one pseudo-random sequence, and n=log₂ K.

12. The method according to claim 11, wherein numbers of the n elements are consecutively arranged in the pseudo-random sequence, or numbers of the n elements are arranged at equal intervals in the pseudo-random sequence.

13. A communication apparatus, comprising a module configured to perform the method according to any one of claims 1 to 12.

14. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 1 to 12 by using a logic circuit or by executing code instructions.

15. A communication apparatus, comprising a processor, wherein the processor is configured to run a computer program or instructions, to cause the method according to any one of claims 1 to 12 to be implemented.

16. A communication chip, wherein the communication chip stores instructions; and when the chip is run on a communication device, the method according to any one of claims 1 to 12 is implemented.

17. A computer-readable storage medium, wherein the storage medium stores a computer program or instructions; and when the computer program or the instructions are executed by a communication apparatus, the method according to any one of claims 1 to 12 is implemented.

18. A computer program product, comprising computer program code, wherein when the computer program code is run on a communication apparatus, the communication apparatus implements the method according to any one of claims 1 to 12.
